# FASCICULE DE BREVET EUROPEEN

(11) **EP 1 684 489 B1**
(45) Date de publication et mention de la délivrance du brevet: **21.04.2010**
(21) Numéro de dépôt: 06100649.0
(22) Date de dépôt: 20.01.2006
(51) Int. Cl.: H04L 29/06

(54) **Procédé de gestion des données personnelles des utilisateurs de services vocaux et serveur d'application pour la mise en oeuvre de ce procédé**
Verfahren zur Verwaltung persönlicher Daten von den Benutzern von Vokaldiensten und zugehöriger Anwendungsserver
Method for managing personal data of the users of vocal services and application server associated

(30) Priorité: 24.01.2005 FR 0500695
(43) Date de publication de la demande: 26.07.2006
(73) Titulaire: FRANCE TELECOM, 75015 Paris (FR)
(72) Inventeur: Maurice, Xavier, 92120 Montrouge (FR)
(74) Mandataire: Delumeau, François Guy

(56) Documents cités:
- EP-A- 1 307 019
- WO-A-02/054808

## Description

### Arrière-plan de l'invention

La présente invention se rapporte à un procédé et à un dispositif permettant d'informer et de garantir l'accord de l'abonné d'un opérateur de téléphonie préalablement à l'utilisation de données personnelles de cet abonné par un fournisseur de services vocaux tiers.

L'opération consistant à informer un utilisateur et à obtenir un accord explicite pour la collecte ou la transmission à un tiers de données personnelles avant la mise en oeuvre d'un service est connue de l'homme du métier sous le nom d' "opt-in".

Elle s'oppose à l'opération "opt-out" dans laquelle l'accord est implicite par défaut.

Dans ce contexte, on connaît en particulier :
- le document WO 02054808 qui décrit une méthode permettant à l'utilisateur d'un téléphone portable d'autoriser ou de refuser la fourniture d'une donnée personnelle de cet utilisateur à un serveur ;
- le document EP 1 307 019 qui décrit une méthode permettant à un utilisateur d'un téléphone mobile de maîtriser la fourniture de ses données personnelles à un fournisseur de service.

L'invention s'applique en particulier, et de façon non limitative, à des services de proximité (basés sur la localisation), pour lesquels un fournisseur de service tiers requiert une information de localisation des abonnés.

On comprend que la localisation est une donnée personnelle sensible, que l'utilisateur ne souhaite pas nécessairement communiquer à un tiers, sans un accord explicite.

Dans le contexte de l'invention, l'accord ou le refus explicite de l'utilisateur de communiquer ses données personnelles à un fournisseur de service est obtenu via une plate-forme vocale en mode VSP (Voice Service Provider) accessible via un terminal téléphonique en composant le numéro d'accès à ce service.

Dans la suite de ce document, cette plate-forme sera désignée sous l'intitulé "serveur de ressources vocales".

On rappelle à cet effet qu'une offre VSP est une offre par laquelle un opérateur fournit à un fournisseur de service un réseau d'accès et une plate-forme vocale, le développement et l'hébergement des applications vocales propres à ce service étant laissés à la liberté du fournisseur de service.

L'invention se fixe plusieurs objectifs, à savoir :
- éviter tout reroutage de communication vocale entre les équipements de l'opérateur de téléphonie et ceux utilisés par le fournisseur de service ; et
- s'assurer que l'utilisateur n'est sollicité que pour les appels destinés à un fournisseur de service pour lesquels une donnée personnelle est effectivement requise.

### Objet et résumé de l'invention

A cet effet, l'invention concerne un serveur d'application susceptible d'être hébergé par un opérateur de téléphonie comportant :
- des moyens pour obtenir, à partir de cet opérateur, des données personnelles d'un utilisateur ;
- des moyens de communication avec un serveur de ressources vocales tiers, adaptés à :
   - recevoir, en provenance de ce serveur de ressources vocales, une requête pour obtenir au moins une donnée personnelle dans le but de la transmettre à un fournisseur de service prédéterminé;
   - envoyer, à ce serveur de ressources vocales, des données numériques, non interprétées par le serveur de ressources vocales et utilisées dans une communication vocale entre le serveur de ressources vocales et l'utilisateur pour obtenir une autorisation ou un refus de l'utilisateur pour fournir la donnée personnelle au fournisseur de service prédéterminé ;
   - recevoir des données numériques représentatives d'une réponse de l'utilisateur, via le serveur de ressources vocales, les données de réponse n'étant pas interprétées par le serveur de ressources vocales ; et
   - envoyer la donnée personnelle au serveur de ressources vocales lorsque la réponse est représentative d'une autorisation de l'utilisateur.

Corrélativement, l'invention concerne un procédé de gestion des données personnelles d'un utilisateur abonné auprès d'un opérateur de téléphonie, ce procédé de gestion comportant :
- une étape de réception, en provenance d'un serveur de ressources vocales, d'une requête pour obtenir au moins une donnée personnelle dans le but de la fournir à un fournisseur de service prédéterminé;
- une étape d'envoi, à ce serveur de ressources vocales, de données numériques, non interprétées par le serveur de ressources vocales, et utilisées dans une communication vocale entre le serveur de ressources vocales et l'utilisateur pour obtenir une autorisation ou un refus de l'utilisateur pour transmettre la donnée personnelle au fournisseur de service prédéterminé ;
- une étape de réception de données numériques représentatives d'une réponse de l'utilisateur, via le serveur de ressources vocales, les données de réponse n'étant pas interprétées par le serveur de ressources vocales ; et
- une étape d'envoi de la donnée personnelle au serveur de ressources vocales lorsque la réponse est représentative d'une autorisation de l'utilisateur.

Ainsi, conformément à l'invention, lorsque l'utilisateur accède, via le serveur de ressources vocales, à un service prédéterminé pour lequel des données personnelles sont requises, ce serveur de ressources vocales peut émettre une requête au serveur d'application pour l'obtention de ces données.

Le serveur d'application fournit alors au serveur de ressources vocales des données numériques selon un scénario préétabli, permettant à ce serveur de ressources vocales d'obtenir l'accord ou le refus de l'utilisateur, via le canal de communication établi au moment de l'appel de l'utilisateur.

L'accord ou le refus de l'utilisateur est alors transmis au serveur d'application de l'opérateur de téléphonie qui peut décider, en fonction de cette réponse, si la donnée personnelle doit ou non être envoyée au fournisseur de service.

De façon très avantageuse, les données numériques utilisées pour le dialogue vocal avec l'utilisateur, et la réponse de l'utilisateur, ne sont pas interprétées par le serveur de ressources vocales. Ainsi, ce serveur n'est utilisé que pour ses ressources vocales à proprement parler, mais il ne comporte aucune intelligence lui permettant d'interpréter l'autorisation ou le refus de l'utilisateur pour la fourniture de ses données personnelles.

L'homme du métier comprendra que les ressources vocales évoquées ici sont constituées par un ensemble de fonctions permettant notamment de synthétiser ou plus généralement de vocaliser un message vocal à partir des données numériques, de reconnaître un code DTMF saisi au niveau du terminal de l'utilisateur ou de reconnaître un mot clé prononcé par l'utilisateur.

Le serveur d'application et le procédé selon l'invention répondent donc aux objectifs fixés.

En effet, la seule communication vocale nécessaire pour l'obtention des données personnelles est celle établie entre le terminal téléphonique de l'utilisateur et le serveur de ressources vocales du tiers. Elle n'est pas reroutée.

Au surplus, l'utilisateur n'est sollicité pour donner son autorisation quant à la fourniture de ses données personnelles que sur requête explicite du fournisseur de service, selon un scénario préétabli mémorisé au sein du serveur d'application.

Différents types de données personnelles sont concernés par l'invention, de façon générale toutes les données personnelles disponibles auprès du serveur d'application de l'opérateur de téléphonie.

Ces données personnelles peuvent notamment être les données de localisation de l'utilisateur que le serveur d'application obtient à partir d'un serveur de localisation géré par ce même opérateur.

Dans un mode préféré de réalisation, les communications établies entre le serveur d'application et le serveur de ressources vocales du tiers s'effectuent par l'intermédiaire de liaisons de données conformément au standard Voice XML (Voice eXtensible Marked up Language).

Pour plus de renseignements sur ce standard, l'homme du métier pourra se reporter aux recommandations publiées le 20 février 2003 par le Consortium W3C et disponible à l'adresse http://www.w3.org/TR/2003/CR-voicexml20-20030220.

Selon une implémentation préférée, les différentes étapes du procédé de gestion sont déterminées par des instructions de programmes d'ordinateurs.

En conséquence, l'invention vise aussi un programme d'ordinateur sur un support d'informations, ce programme étant susceptible d'être mis en oeuvre dans un serveur d'application, ce programme comportant des instructions adaptées à la mise en oeuvre d'un procédé de gestion tel que mentionné brièvement ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un serveur d'application, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un serveur d'application conforme à l'invention dans un mode préféré de réalisation, et l'utilisation de ce serveur dans une opération d' "opt-in" ; et
- la figure 2 représente, sous forme d'organigramme, les principales étapes d'un procédé de gestion conforme à l'invention dans un mode préféré de réalisation.

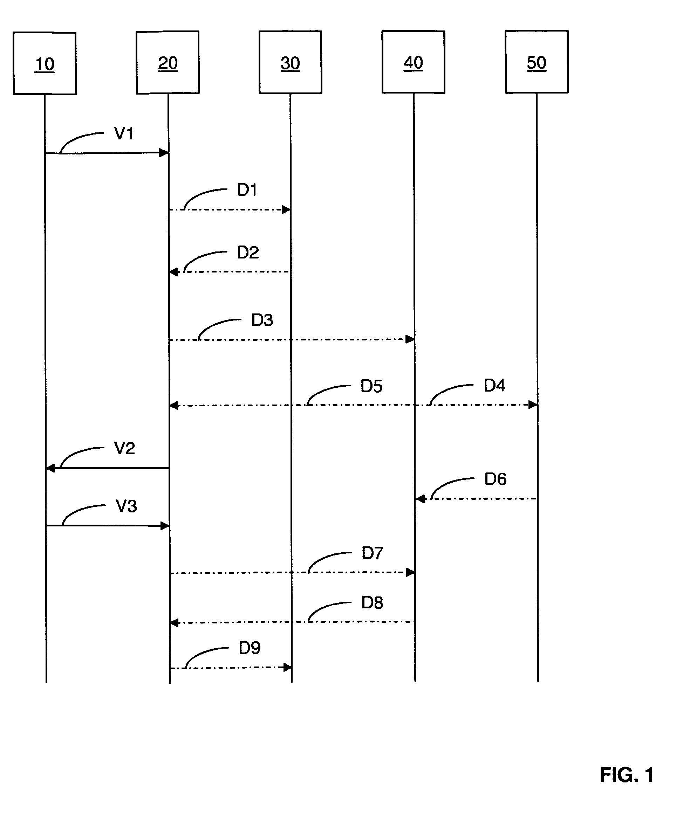

Sur la **figure 1** est représenté un terminal téléphonique 10 connecté au réseau de téléphonie (non représenté) d'un opérateur de téléphonie auprès de qui il est abonné.

On suppose que cet utilisateur souhaite accéder à un service fourni par un fournisseur 30. Pour l'accès à ce service, l'utilisateur compose, au moyen de son terminal 10, un numéro d'accès à ce service. Cet appel est acheminé, de façon connue, via le réseau de l'opérateur de téléphonie et éventuellement via un autre réseau, vers un serveur de ressources vocales 20.

Il s'établit alors un premier dialogue (matérialisé par la flèche pleine V1) dans le canal de communication vocale entre le terminal 10 et le serveur de ressources vocales 20.

Ce serveur de ressources vocales 20 est une plate-forme par laquelle l'opérateur de téléphonie met à disposition d'un tiers des ressources vocales et des ressources d'accès au réseau pour développer une application vocale.

Sur réception de l'appel du terminal 10, le serveur de ressources vocales 20 invoque une application vocale hébergée par le fournisseur de service 30, cette invocation étant matérialisée par la flèche D1 sur la figure 1.

Sur cette figure, les flèches tiretées représentent des messages de données.

On supposera, dans l'exemple décrit ici, que le service sollicité par l'utilisateur requiert des données de localisation de cet utilisateur. En conséquence, l'application hébergée par le fournisseur de service 30 envoie un message D2 au serveur de ressources vocales 20, pour que celui-ci obtienne des données personnelles de localisation de l'utilisateur auprès de l'opérateur de téléphonie qui gère ces données.

Sur réception de ce message D2, le serveur de ressources vocales établit une communication via une liaison de données avec un serveur d'application 40 conforme à l'invention.

Dans le mode préféré de réalisation décrit ici, le serveur de ressources vocales 20 et le serveur d'application 40 communiquent au moyen du standard Voice XML.

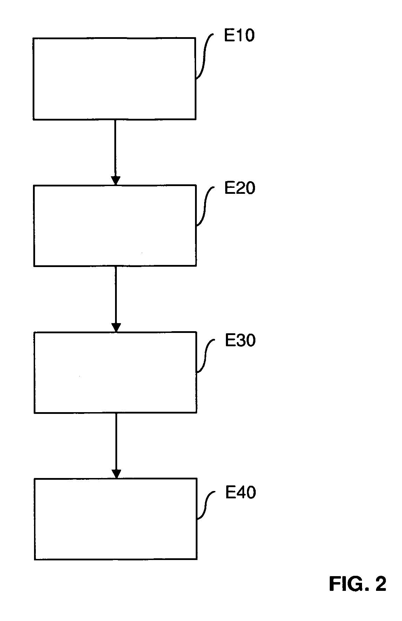

Quoi qu'il en soit, le serveur de ressources vocales 20 utilise cette liaison de données pour envoyer une requête D3 au serveur d'application 40 pour obtenir la donnée personnelle de localisation de l'utilisateur, dans le but de fournir cette donnée au fournisseur de service 30. Cette requête est reçue par le serveur d'application 40 au cours d'une étape E10 représentée sur la **figure 2****.**

Cette requête D3 comporte notamment un identifiant du service sollicité par l'utilisateur et un identifiant du terminal 10, par exemple son numéro de téléphone.

Sur réception de cette requête D3, le serveur d'application effectue deux opérations, préférentiellement simultanément.

Tout d'abord, il envoie une requête D4, à destination d'un serveur de localisation 50 géré par l'opérateur de téléphonie, pour obtenir la localisation de l'utilisateur, cette requête comportant par exemple le numéro du terminal 10.

En parallèle, selon un scénario prédéterminé établi au préalable avec le fournisseur de service 30, le serveur d'application 40 envoie, au cours d'une étape E20, au serveur de ressources vocales 20, des données numériques D5.

Ces données numériques peuvent par exemple être constituées par un fichier représentatif d'une annonce vocale synthétisable par le serveur de ressources vocales 20.

Quoi qu'il en soit, le serveur de ressources vocales 20 n'interprète pas ces données numériques. Il les utilise simplement pour générer un dialogue, dans le canal de communication vocale déjà établi avec le terminal 10, pour obtenir une autorisation ou un refus de l'utilisateur pour fournir la donnée personnelle de localisation au fournisseur de service 30.

L'annonce du serveur de ressources vocales au terminal de l'utilisateur est matérialisée par la flèche V2, la réponse de l'utilisateur par la flèche V3.

On supposera que, pendant ce dialogue, le serveur d'application 40 reçoit depuis le serveur de localisation 50 de l'opérateur, un message D6 comportant la localisation de l'utilisateur du terminal 10.

Lorsque le serveur de ressources vocales 20 reçoit la réponse vocale V3 de l'utilisateur, il génère un message D7 comportant des données numériques représentatives de cette réponse, à destination du serveur d'application 40. Ces données numériques de réponse ne sont pas directement interprétées par le serveur de ressources vocales 20.

Quoi qu'il en soit, cette réponse D7 est reçue par le serveur d'application 40 au cours d'une étape E30.

Cette réponse est interprétée par le serveur d'application 40 comme une autorisation ou un refus de l'utilisateur pour fournir la donnée personnelle de localisation au fournisseur de service 30.

Si cette réponse est représentative d'une autorisation, le serveur d'application 40 envoie la donnée personnelle de localisation au serveur de ressources vocales 20 au cours d'une étape E40. Dans le cas contraire, le serveur d'application 40 peut envoyer au serveur de ressources vocales 20 une notification de refus.

Cette donnée personnelle ou cette notification de refus est comprise dans un message D8.

Sur réception du message D8, le serveur de ressources vocales 20 sollicite le fournisseur de service 30 par l'envoi d'un message D9 comportant soit la localisation de l'utilisateur du terminal téléphonique 10, soit un refus de cet utilisateur pour communiquer sa localisation au fournisseur de service 30.

## Revendications

1. Serveur d'application (40) **caractérisé en ce qu'**il comporte :
- des moyens pour obtenir des données personnelles d'un utilisateur ;
- des moyens de communication avec un serveur de ressources vocales tiers (20), adaptés à :
- recevoir, en provenance de ce serveur de ressources vocales (20), une requête (D3) pour obtenir au moins une donnée personnelle dans le but de la transmettre à un fournisseur de service prédéterminé (30) ;
- envoyer, à ce serveur de ressources vocales (20), des données numériques (D5), non interprétées par ledit serveur de ressources vocales (20) et utilisées dans une communication vocale entre le serveur de ressources vocales et ledit utilisateur pour obtenir une autorisation ou un refus de l'utilisateur pour fournir ladite donnée personnelle au fournisseur de service prédéterminé (30) ;
- recevoir des données numériques (D7) représentatives d'une réponse dudit utilisateur, via le serveur de ressources vocales (20), lesdites données de réponse n'étant pas interprétées par ledit serveur de ressources vocales (20) ; et
- envoyer ladite donnée personnelle audit serveur de ressources vocales (20) lorsque ladite réponse est représentative d'une autorisation dudit utilisateur.

2. Serveur d'application selon la revendication 1, **caractérisé en ce que** ladite donnée personnelle est une donnée de localisation de l'utilisateur obtenue, par ledit serveur d'application (40), à partir d'un serveur (50) de localisation.

3. Serveur d'application selon la revendication 1 ou 2, **caractérisé en ce que** lesdits moyens de communication sont adaptés à communiquer avec ledit serveur de ressources vocales (20) conformément au standard Voice XML.

4. Procédé de gestion des données personnelles d'un utilisateur, **caractérisé en ce qu'**il comporte :
- une étape (E10) de réception, en provenance d'un serveur de ressources vocales (20), d'une requête (D3) pour obtenir au moins une donnée personnelle dans le but de la transmettre à un fournisseur de service prédéterminé (30) ;
- une étape (E20) d'envoi, à ce serveur de ressources vocales (20), de données numériques (D5), non interprétées par ledit serveur de ressources vocales (20) et utilisées dans une communication vocale entre le serveur de ressources vocales et ledit utilisateur pour obtenir une autorisation ou un refus de l'utilisateur pour fournir ladite donnée personnelle au fournisseur de service prédéterminé (30) ;
- une étape (E30) de réception de données numériques représentatives d'une réponse dudit utilisateur, via le serveur de ressources vocales (20), lesdites données de réponse n'étant pas interprétées par ledit serveur de ressources vocales ; et
- une étape (E40) d'envoi de ladite donnée personnelle audit serveur de ressources vocales (20) lorsque ladite réponse est représentative d'une autorisation dudit utilisateur.

5. Procédé de gestion selon la revendication 4, **caractérisé en ce que** lesdits étapes d'envoi et de réception de données mettent en oeuvre le standard Voice XML.

6. Programme d'ordinateur sur un support d'informations, ledit programme étant susceptible d'être mis en oeuvre dans un serveur d'application selon l'une quelconque des revendications 1 à 3, ce programme comportant des instructions adaptées à la mise en oeuvre d'un procédé de gestion selon la revendication 4 ou 5.

7. Support d'informations lisible par un serveur d'application selon l'une quelconque des revendications 1 à 3, ce support comportant des instructions d'un programme d'ordinateur selon la revendication 6.

## Claims

1. Application server (40) **characterized in that** it comprises:
- means for obtaining personal data of a user;
- means of communication with a third-party voice resources server (20), suitable for:
- receiving, from this voice resources server (20), a request (D3) to obtain at least one personal datum with the aim of transmitting it to a predetermined service provider (30);
- sending, to this voice resources server (20), digital data (D5), not interpreted by said voice resources server (20) and used in a voice communication between the voice resources server and said user to obtain an authorization or a refusal of the user to provide said personal datum to the predetermined service provider (30);
- receiving digital data (D7) representative of a response of said user, via the voice resources server (20), said response data not being interpreted by said voice resources server (20); and
- sending said personal datum to said voice resources server (20) when said response is representative of an authorization of said user.

2. Application server according to Claim 1, **characterized in that** said personal datum is a user location datum obtained, by said application server (40), on the basis of a location server (50).

3. Application server according to Claim 1 or 2, **characterized in that** said communication means are suitable for communicating with said voice resources server (20) in accordance with the Voice XML standard.

4. Method for managing the personal data of a user **characterized in that** it comprises:
- a step (E10) of receiving, from a voice resources server (20), a request (D3) to obtain at least one personal datum with the aim of transmitting it to a predetermined service provider (30);
- a step (E20) of sending, to this voice resources server (20), digital data (D5), not interpreted by said voice resources server (20) and used in a voice communication between the voice resources server and said user to obtain an authorization or a refusal of the user to provide said personal datum to the predetermined service provider (30);
- a step (E30) of receiving digital data representative of a response of said user, via the voice resources server (20), said response data not being interpreted by said voice resources server; and
- a step (E40) of sending said personal datum to said voice resources server (20) when said response is representative of an authorization of said user.

5. Management method according to Claim 4, **characterized in that** said steps of sending and receiving data implement the Voice XML standard.

6. Computer program on an information medium, said program being able to be implemented in an application server according to any one of Claims 1 to 3, this program comprising instructions suited to the implementation of a management method according to Claim 4 or 5.

7. Information medium readable by an application server according to any one of Claims 1 to 3, this medium comprising instructions of a computer program according to Claim 6.

## Patentansprüche

1. Anwendungsserver (40), **dadurch gekennzeichnet, dass** er aufweist:
- Einrichtungen, um persönliche Daten eines Benutzers zu erhalten;
- Einrichtungen zur Kommunikation mit einem Sprachressourcen-Drittserver (20), die geeignet sind, um:
- von diesem Sprachressourcen-Server (20) kommend eine Anforderung (D3) zu empfangen, um mindestens einen persönlichen Datenwert zu erhalten, um ihn an einen vorbestimmten Diensteanbieter (30) zu übertragen;
- an diesen Sprachressourcen-Server (20) digitale Daten (D5) zu senden, die nicht von dem Sprachressourcen-Server (20) interpretiert und in einer Sprachkommunikation zwischen dem Sprachressourcen-Server und dem Benutzer verwendet werden, um eine Genehmigung oder eine Weigerung von dem Benutzer zu erhalten, um den persönlichen Datenwert an den vorbestimmten Diensteanbieter (30) zu liefern;
- über den Sprachressourcen-Server (20) für eine Antwort des Benutzers repräsentative digitale Daten (D7) zu empfangen, wobei die Antwortdaten nicht vom Sprachressourcen-Server (20) interpretiert werden; und
- den persönlichen Datenwert an den Sprachressourcen-Server (20) zu senden, wenn die Antwort für eine Genehmigung durch den Benutzer repräsentativ ist.

2. Anwendungsserver nach Anspruch 1, **dadurch gekennzeichnet, dass** der persönliche Datenwert ein Lokalisierungs-Datenwert des Benutzers ist, der von dem Anwendungsserver (40) ausgehend von einem Lokalisierungsserver (50) erhalten wurde.

3. Anwendungsserver nach Anspruch 1 oder 2, **dadurch gekennzeichnet, dass** die Kommunikationseinrichtungen geeignet sind, um mit dem Sprachressourcen-Server (20) gemäß dem Standard VoiceXML zu kommunizieren.

4. Verfahren zur Verwaltung der persönlichen Daten eines Benutzers, **dadurch gekennzeichnet, dass** es aufweist:
- einen Schritt (E10) des Empfangs einer Anforderung (D3) von einem Sprachressourcen-Server (20), um mindestens einen persönlichen Datenwert zu erhalten, um ihn an einen vorbestimmten Diensteanbieter (30) zu übertragen;
- einen Schritt (E20) des Sendens, an diesen Sprachressourcen-Server (20), von digitalen Daten (D5), die nicht vom Sprachressourcen-Server (20) interpretiert und in einer Sprachkommunikation zwischen dem Sprachressourcen-Server und dem Benutzer verwendet werden, um eine Genehmigung oder eine Weigerung von dem Benutzer zu erhalten, um den persönlichen Datenwert an den vorbestimmten Diensteanbieter (30) zu liefern;
- einen Schritt (E30) des Empfangs von für eine Antwort des Benutzers repräsentativen digitalen Daten über den Sprachressourcen-Server (20), wobei die Antwortdaten nicht vom Sprachressourcen-Server (20) interpretiert werden; und
- einen Schritt (E40) des Sendens des persönlichen Datenwerts an den Sprachressourcen-Server (20), wenn die Antwort für eine Genehmigung durch den Benutzer repräsentativ ist.

5. Verwaltungsverfahren nach Anspruch 4, **dadurch gekennzeichnet, dass** die Schritte des Sendens und des Empfangs von Daten den Standard VoiceXML anwenden.

6. Computerprogramm auf einem Datenträger, wobei das Programm in einem Anwendungsserver nach einem der Ansprüche 1 bis 3 durchgeführt werden kann, wobei dieses Programm Anweisungen enthält, die für die Durchführung eines Verwaltungsprogramms nach Anspruch 4 oder 5 geeignet sind.

7. Datenträger, der von einem Anwendungsserver nach einem der Ansprüche 1 bis 3 lesbar ist, wobei dieser Träger Anweisungen eines Computerprogramms nach Anspruch 6 enthält.
